Europäisches Patentamt

(19) European Patent Office  (11) Publication number: **0 020 762**

Office européen des brevets  **B1**

(12) **EUROPEAN PATENT SPECIFICATION**

(45) Date of publication of patent specification: **13.02.85**  (51) Int. Cl.⁴: **B 63 H 25/46, F 03 B 17/06**

(21) Application number: **80900830.3**

(22) Date of filing: **05.11.79**

(86) International application number: **PCT/GB79/00176**

(87) International publication number: **WO 80/00948 15.05.80 Gazette 80/11**

(54) **STEERING AND PROPULSION MEANS IN VESSELS.**

(30) Priority: **10.11.78 GB 4402078**

(43) Date of publication of application: **07.01.81 Bulletin 81/01**

(45) Publication of the grant of the patent: **13.02.85 Bulletin 85/07**

(84) Designated Contracting States: **DE**

(56) References cited:
**DE-A-1 531 628**
**FR-A-1 016 293**
**FR-A-1 375 210**
**FR-A-1 555 906**
**FR-A-2 359 746**
**US-A-1 441 519**

(73) Proprietor: **ELLIOTT TURBOMACHINERY LIMITED 40 Medina Road Cowes, Isle of Wight (GB)**

(72) Inventor: **SLADE, Owen George 40 Parklands Avenue Cowes, Isle of Wight (GB)**

(74) Representative: **Rehberg, Elmar, Dipl.-Ing. Patentanwälte, Dipl.-Ing. R. Bibrach Dipl.-Ing. E. Rehberg Postfach 7 38 Pütterweg 6 D-3400 Göttingen (DE)**

Courier Press, Leamington Spa, England.

## Description

This invention relates to steering and propulsion means in ships or other vessels.

Steering and propulsion means for ships and other vessels are known which are mountable in the bottom of a vessel and which are adapted to pump a fluid, usually water, under pressure through an outlet in the bottom of the vessel, the outlet comprising deflector means adapted to discharge the fluid under pressure as a stream or jet which will provide thrust having a substantially horizontal component, the deflector means being rotatable through 360° about a vertical axis so that said stream or jet can be directed as required to provide both propulsion and steering. Such a steering and propulsion means will hereinafter be referred to as "a steering and propulsion means of the kind described".

In GB—A—1,213,981 or in FR—A—1555906 there is disclosed steering and propulsion means of the kind described comprising a hollow casing defining a passage substantially in the form of a shallow inverted "U", one end of the passage communicating with an inlet opening in the bottom and/or side of the vessel and the other end of the passage communicating with said outlet, suitable pump means being mounted in said passage for drawing water in through said inlet opening and discharging it, under pressure, through said outlet. Two shafts extend into said casing through suitable glands, said shafts being offset from one another and passing one another within said passage, one of said shafts being a drive shaft one end of which is connectable to said pump means and the other end to a suitable prime mover and the other said shaft being a steering shaft one end of which is connected to said deflector means and the other end of which is connectable to suitable steering control means.

In GB—A—1,362,694 there is disclosed a ship retarding system for assisting in the slowing down of large oil tankers and like vessels at sea and which at the same time is capable of assisting manoeuvring of such vessels in port. The system comprises a steering and propulsion means of the kind described having a casing defining a passage having a substantially horizontal portion containing pump means and connected to a forward facing inlet opening in the hull of the vessel and a substantially vertical portion connected to said outlet. Two offset shafts extend into said casing, one being a substantially horizontal shaft for driving the pump means and the other a substantially vertical shaft for rotating the deflector means.

A disadvantage with known steering and propulsion means of the kind described is the inherent lack of flexibility in the manner in which they can be installed in a vessel. Thus each known steering and propulsion means of the kind described is such that it can only be installed with the water inlet thereto either in the bottom of a vessel, in the bow or in the side of a vessel or partially in the bottom and partially in the bow or side of a vessel and a steering and propulsion means designed for one of these applications cannot be used for either of the other applications.

Another disadvantage with known steering and propulsion means of the kind described is that access to the pump bearings and other internal parts for servicing can only be gained through the inlet or outlet end of the casing and for this reason the means has to be demountably installed in a vessel. This necessitates providing expensive machined seatings in the hull of the vessel to which the steering and propulsion means is demountably secured.

A further disadvantage with known steering and propulsion means of the kind described, and particularly those having a substantially inverted U-shaped casing such as that disclosed in the said GB—A—1,213,981, is that because of its shape the casing is difficult to fabricate and accordingly generally comprises a relatively expensive casting.

The present invention has as its object to provide, in a vessel, steering and propulsion means of the kind described which is such as to provide a greater degree of flexibility in the manner in which the steering and propulsion means can be installed in a vessel.

The present invention also has as its object to provide, in a vessel, steering and propulsion means of the kind described which is capable of being serviced from within the vessel without being demounted therefrom, which does not require expensive machined seatings, and the casing of which is capable of being fabricated.

The present invention provides a vessel having steering and propulsion means of the kind described. According to the invention the vessel is provided with a water chamber formed within the hull and defined by a plurality of upwardly extending partition walls connected to the hull, at least one of which is substantially vertical, by the portion of the hull having the water inlet opening therein, and by a top wall, whereby the chamber is adapted to be flooded with water from the water inlet opening yet is watertight from the remainder of the vessel. The water chamber is provided with a removable closure whereby access can be gained from the interior of the vessel to the interior of the chamber and with a discharge aperture in the substantially vertical partition wall. The combined steering and propulsion means is installed in the vessel between the water chamber and the outlet opening in the hull such that the horizontally extending portion of the casing surrounds the discharge aperture in the substantially vertical partition wall of the water chamber, is secured to said wall by a watertight weld and is in communication with the interior of the water chamber, and the substantially vertically downwardly extending discharge portion of the casing surrounds the water outlet opening in the bottom of the hull and is secured to said bottom by a watertight weld.

It will readily be appreciated that since said chamber can be installed as required in a vessel according to whether the water inlet thereto is to be in the bottom of the vessel, in the bow or in the side of the vessel or partially in the bottom and partially in the bow or side of the vessel, a great deal of flexibility is provided in the manner in which the steering and propulsion means can be installed.

According to a preferred embodiment of the present invention the substantially horizontally extending portion of the casing of the steering and propulsion means extends through the aperture in said one substantially vertical partition wall and into the water chamber. The rotatable waterpump is located within the inlet portion of the casing extending into the water chamber.

The portion of the hull of the vessel that defines part of the chamber comprises part of the bottom of the vessel. The portion of the hull of the vessel that defines part of the chamber may comprise part of the bow of the vessel or of the side of the vessel.

The invention will be more particularly described with reference to the accompanying diagrammatic drawings, in which:—

Fig. 1 is a fragmentary cross-sectional elevation of a vessel provided with steering and propulsion means, according to the present invention, only a small part of the bottom of the vessel being shown,

Fig. 2 is a fragmentary side elevation partly in section of an alternative embodiment of the present invention only a small part of the hull of the vessel again being shown, and

Fig. 3 is a view similar to Fig. 2 of yet a further embodiment of the present invention.

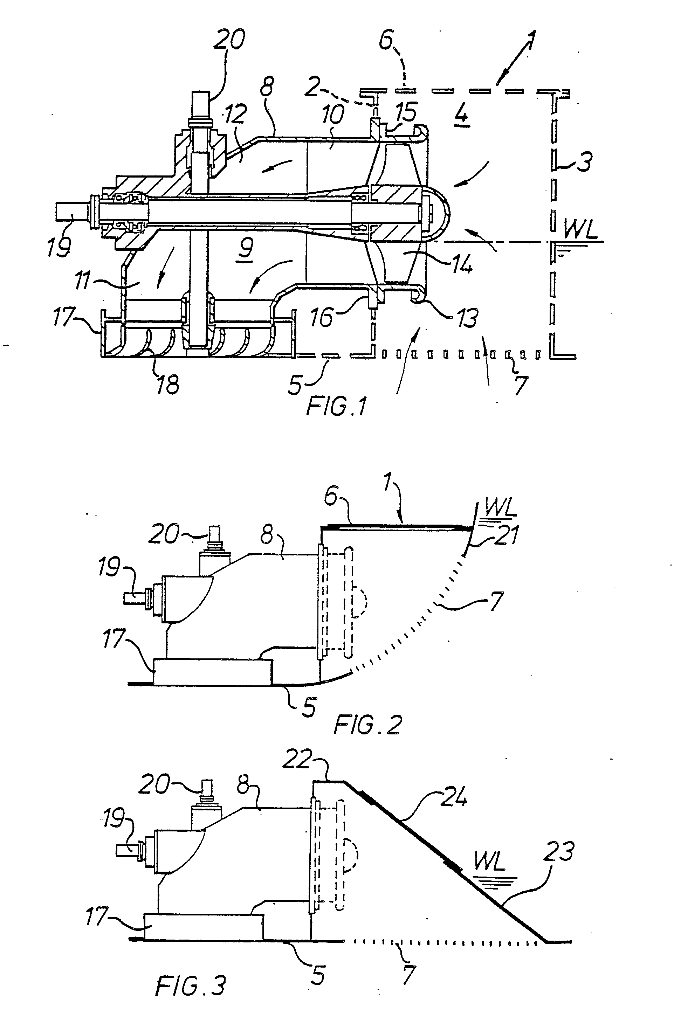

Referring to Fig. 1 it will be seen that a rectangular box-like chamber 1 defined by opposed side walls 2 and 3, opposed end walls of which only one designated 4 is shown, by the bottom 5 of the vessel and by a removable top wall or cover 6 is provided within the vessel so as to be watertight from the remainder of the vessel. A water inlet 7 in the bottom 5 of the vessel communicates with the interior of the chamber 1. Also provided within the vessel is steering and propulsion means comprising a casing 8 defining a passage 9 having a substantially horizontal inlet portion 10, a substantially vertical outlet portion 11 and an intermediate connecting portion 12.

The inlet end of the casing 8 comprises a separately formed portion 13 which projects through an aperture in the wall 2 into the chamber 1 and contains pump means 14, the portion 13 having an outwardly directed flange 15 which is connected to a flange 16 of the adjacent portion of the casing. The flange 16 is permanently secured, e.g., welded, to the wall 2 about said aperture therein. The outlet end of the casing 8 comprises an enlarged diameter portion 17 permanently secured, e.g., welded, to the bottom 5 of the vessel around an outlet opening therein. The enlarged diameter portion 17 of the casing houses deflector means 18 rotatable through 360° in either direction and adapted to direct water under pressure from the pump means 14 as a stream or jet which will provide thrust having a substantially horizontal component.

Extending into the casing 8 is a substantially horizontal drive shaft 19 one end of which is connected to the pump means 14 and the other end of which is connectable to a suitable prime mover (not shown) and a substantially vertical steering shaft 20 one end of which is connected to the deflector means 18 and the other end of which is connectable to steering control means (not shown). The shafts 19 and 20 are offset from one another and pass one another within the intermediate portion 12 of the passage 9. The drive shaft 19 can be designed to be driven by the prime mover through suitable belt drive means which will provide a required drive ratio without the use of a costly gearbox or like reduction mechanism.

The embodiment of Fig. 2, in which like parts have been given like reference numerals, is substantially the same as that of Fig. 1 except that the chamber 1 is partially defined by the side or bow 21 of the vessel, which replaces the side wall 3, and the water inlet 7 is provided in the side or bow 21.

The embodiment of Fig. 3, in which like parts have again been given like reference numerals, is again similar to that of Fig. 1 except that the removable wall or cover 6 of the chamber 1 is replaced by a top wall 22, the vertical side wall 3 is replaced by a wall 23 inclined to the vertical, and a removable cover 24 is provided in the inclined wall 23 whereby access can be gained to the interior of the chamber 1.

From the foregoing description of the illustrated embodiments it will be readily appreciated that the chamber 1 is capable of considerable variation and is readily adaptable to accommodate a water inlet either in the bottom, in the bow or side or partially in the bottom and partially in the bow or side of a vessel, thus providing a great degree of flexibility in the manner in which the steering and propulsion means can be provided in a vessel. The casing 8 of the steering and propulsion means is of a simple design and can readily be produced by fabrication. Moreover, access can be gained to the interior of the chamber 1 and to the internal parts of the steering and propulsion means through the removable top wall or cover 6 or 24 for servicing or routine maintenance of the steering and propulsion means, thus enabling the steering and propulsion means to be permanently secured in position and eliminating the need for expensive machined seatings in the hull of the vessel such as are required when the steering and propulsion means has to be demountable in order to enable servicing or routine maintenance to be carried out thereon.

**Claims**

1. A vessel having a hull (5, 21) provided with a water inlet opening (7) therein and a water outlet opening in the bottom thereof;

said vessel further having a combined steering and propulsion means associated therewith, comprising a hollow casing (8) defining a water passage (9) therethrough, said hollow casing including a substantially horizontally extending portion (10) having a rotatable waterpump (14) coaxially disposed therein, a substantially vertically downwardly extending discharge portion (11) having coaxially disposed therein a deflector (18) which is rotatable about a substantially vertical axis and adapted to discharge water as a stream or jet through the water outlet opening in the bottom of the hull to provide thrust having a substantially horizontal component which may be directed as desired to provide propulsion and steering, an intermediate portion (12) connecting the horizontally and vertically extending portions thereof, a horizontally extending drive shaft (19) extending into said hollow casing (8) for connecting said waterpump to a prime mover, and a vertically extending steering shaft (20) extending into said hollow casing for connecting said deflector to a steering control means;

characterised in that the vessel is provided with a water chamber (1) formed within the hull and defined by a plurality of upwardly extending partition walls (2, 3, 4; 23) connected to the hull, at least one of which (2) is substantially vertical, by the portion of the hull (5, 21) having the water inlet opening therein, and by a top wall (6; 22), whereby the chamber is adapted to be flooded with water from the water inlet opening yet is watertight from the remainder of the vessel;

the water chamber (1) being provided with a removable closure (6, 24) whereby access can be gained from the interior of the vessel to the interior of the chamber and with a discharge aperture in the substantially vertical partition wall (2);

the combined steering and propulsion means being installed in the vessel between the water chamber and the outlet opening in the hull such that the horizontally extending portion (10) of the casing (8) surrounds the discharge aperture in the substantially vertical partition wall (2) of the water chamber (1), is secured to said wall by a watertight weld and is in communication with the interior of the water chamber, and the substantially vertically downwardly extending discharge portion (11) of the casing (8) surrounds the water outlet opening in the bottom (5) of the hull and is secured to said bottom by a watertight weld.

2. A vessel as claimed in Claim 1 wherein the substantially horizontally extending portion (10) of the casing (8) of the steering and propulsion means extends through the aperture in said one substantially vertical partition wall (2) and into the water chamber (1).

3. A vessel as claimed in Claim 2 wherein the rotatable waterpump (14) is located within the inlet portion (13) of the casing (8) extending into the water chamber (1).

4. A vessel as claimed in any one of claims 1 to 3 wherein the portion of the hull of the vessel that defines part of the chamber (1) comprises part of the bottom (5) of the vessel.

5. A vessel as claimed in any one of claims 1 to 3 wherein the portion of the hull of the vessel that defines part of the chamber (1) comprises part of the bow (21) of the vessel.

6. A vessel as claimed in any one of claims 1 to 3 wherein the portion of the hull of the vessel that defines part of the chamber (1) comprises part of the side of the vessel.

**Patentansprüche**

1. Wasserfahrzeug, in dessen Schiffswandung (5, 21) eine Wassereinlaßöffnung (7) und in dessen Boden eine Wasserauslaßöffnung vorgesehen sind, mit einer kombinierten Steuer- und Vortriebseinheit, die ein einen Wasserkanal (9) bildendes hohlres Gehäuse (8) aufweist, welches einen sich im wesentlichen horizontal erstreckenden Teil (10) mit einer koaxial darin angeordneten rotierenden Wasserpumpe (14), einen sich im wesentlichen vertikal abwärts erstreckenden Auslaßteil (11) mit einer koaxial darin angeordneten Ablenkvorrichtung (18), wobei die Ablenkvorrichtung um eine etwa vertikale Achse drehbar und dazu angepaßt ist, um das Wasser in einem Strom oder Strahl durch die Wasseraustrittsöffnung im Boden der Schiffswandung mit einer im wesentlichen horizontal wirkenden Schubkomponente ausströmen zu lassen, um so sowohl den Vortrieb als auch die Steuerung zu ermöglichen, einen den horizontalen und den vertikalen Teil verbindenden Mittelteile (12), eine horizontal aus dem hohlen Gehäuse (8) herausragende Antriebswelle (19) zum Anschluß der Wasserpumpe an einen Primärmotor sowie eine vertikal aus dem Gehäuse herausragende Steuerwelle (20) zur Verbindung der Ablenkvorrichtung mit der Steuervorrichtung aufweist, dadurch gekennzeichnet, daß das Wasserfahrzeug mit einer wasserdicht vom Schiffsinnenraum abgetrennten Kammer (1) versehen ist, die durch eine Anzahl von sich aufwärts erstreckenden und mit der Schiffswandung verbundenen Wandteilen (2, 3, 4; 23), von denen mindestens einer (2) etwa vertikal angeordnet ist, durch die Schiffswandung (5, 21) mit der Wassereinlaßöffnung darin, und durch eine Deckwand (6; 22) gebildet ist, wobei die Kammer von der Wassereinlaßöffnung her mit Wasser flutbar ausgebildet ist,

daß die Kammer (1) mit einer entfernbaren Klappe (6, 24) versehen ist, die den Zugang vom Innern des Wasserfahrzeuges zu dem Innern der Kammer gestattet und eine Auslaßöffnung in dem im wesentlichen vertikalen Wandteil (2) aufweist,

und daß die kombinierte Steuer- und Vortriebseinheit in dem Wasserfahrzeug zwischen der Kammer und der Auslaßöffnung in der Schiffswandung derart vorgesehen ist, daß der sich horizontal erstreckende Teil (10) des Gehäuses (8) die Auslaßöffnung in dem vertikalen Wandteil (2) der Kammer (1) umgibt, und an diesem Wandteil durch eine wasserdichte Schweißung angeschlossen ist und mit dem Innern der Kammer in Verbindung steht, und wobei der sich im wesentlichen abwärts erstreckende Auslaßteil (11) des Gehäuses (8) die Wasserauslaßöffnung im Boden (5) der Schiffswandung umgibt und mit diesem Boden durch eine wasserdichte Schweißung in Verbindung steht.

2. Wasserfahrzeug nach Anspruch 1, dadurch gekennzeichnet, daß der sich im wesentlichen horizontal erstreckende Teil (10) des Gehäuses (8) der Steuer- und Vortriebseinheit durch die Öffnung in dem im wesentlichen vertikalen Wandteil (2) hindurch bis in die Kammer (1) erstreckt.

3. Wasserfahrzeug nach Anspruch 2, dadurch gekennzeichnet, daß die rotierende Wasserpumpe (14) in dem Einlaßteil (13) des Gehäuses (8), welches in die Kammer (1) einragt, angeordnet ist.

4. Wasserfahrzeug nach einem der Ansprüche 1 bis 3, dadurch gekennzeichnet, daß der Teil der Schiffswandung des Wasserfahrzeugs, der Teil der Kammer (1) ist, einen Teil des Bodens (5) des Wasserfahrzeugs bildet.

5. Wasserfahrzeug nach einem der Ansprüche 1 bis 3, dadurch gekennzeichnet, daß der Teil der Schiffswandung des Wasserfahrzeugs, der Teil der Kammer (1) ist, einen Teil des Bugs (21) des Wasserfahrzeugs bildet.

6. Wasserfahrzeug nach einem der Ansprüche 1 bis 3, dadurch gekennzeichnet, daß der Teil der Schiffswandung des Wasserfahrzeugs, der Teil der Kammer (1) ist, einen Teil der Seitenwand des Wasserfahrzeuges bildet.

**Revendications**

1. Bateau comprenant une coque (5, 21) dans laquelle sont ménagées une ouverture d'entrée d'eau (7) et une ouverture de sortie d'eau dans le fond;

ce bateau possédant en outre des moyens combinés de direction et de propulsion associés à lui et comprenant une enveloppe creuse (8) définissant une passage d'eau (9) à travers celle-ci, cette enveloppe comportant une partie (10) orientée sensiblement horizontalement et à l'intérieur de laquelle est disposée co-axialement une pompe à eau rotative (14), une portion (11) d'évacuation orientée vers le bas sensiblement selon la verticale avec à l'intérieur un déflecteur (18) disposé co-axialement et qui peut tourner autour d'un axe sensiblement vertical et peut évacuer de l'eau sous forme d'un jet ou courant par l'ouverture de sortie d'eau dans le fond de la coque afin de créer une poussée ayant une composante sensiblement horizontale pouvant être orientée à volonté pour assurer la propulsion et la direction, une partie intermédiaire (12) reliant les parties horizontales et verticales, un arbre d'entraînement sensiblement horizontal (19) placé à l'intérieur de l'enveloppe creuse (8) du façon ax relier la pompe à eau à un moteur primaire, et un arbre de direction sensiblement vertical (20) monté à l'intérieur de l'enveloppe creuse et reliant le déflecteur à un moyen de contrôle de direction;

caractérisé en ce que le bateau comprend une chambre à eau (1) formée à l'intérieur de la coque et délimitée par une pluralité de cloisons (2, 3, 4; 23) s'étendant vers le haut, dont une au moins (2) est sensiblement verticale, et qui sont reliées à la coque, par la partie de la coque (5, 21) comprenant l'ouverture d'entrée d'eau et par une paroi supérieure (6; 22) de façon que cette chambre soit susceptible d'être remplie par l'eau pénétrant par l'ouverture d'entrée d'eau mais soit étanche à l'eau par rapport au reste du bateau;

la chambre à eau (1) comprenant une fermeture amovible (6, 24) par laquelle il est possible d'accéder depuis l'intérieur du bateau jusqu'à l'intérieur de la chambre et d'une ouverture d'évacuation dans la cloison sensiblement verticale (2);

les moyens combinés de direction et de propulsion étant installés dans le bateau entre la chambre à eau et l'ouverture d'évacuation de la coque de façon ax ce que la partie horizontale (6) de l'enveloppe (8) entoure l'ouverture d'évacuation de la cloison sensiblement verticale (2) de la chambre à eau (1), qu'elle soit fixée à cette cloison par une soudure étanche à l'eau, et qu'elle soit en communication avec l'intérieur de la chambre à eau, et que la partie (11) d'évacuation, orientée sensiblement verticalement vers le bas de l'enveloppe (8) entoure l'ouverture de sortie d'eau du fond (5) de la coque et soit fixée au fond de la coque par une soudure étanche à l'eau.

2. Bateau selon la revendication 1 dans lequel la partie sensiblement horizontale (10) de l'enveloppe (8) des moyens de direction et de propulsion passe par l'ouverture ménagée dans la paroi sensiblement verticale (2) et pénètre dans la chambre à eau (1).

3. Bateau selon la revendication 2 dans lequel la pompe à eau rotative (14) est placée à l'intérieur de la portion d'entrée (13) de l'enveloppe (8) s'étendant à l'intérieur de la chambre à eau (1).

4. Bateau selon l'une des revendications 1 à 3, caractérisé en ce que la portion de la coque du bateau, qui délimite la chambre (1), comprend une partie du fond (5) du bateau.

5. Bateau selon l'une des revendications 1 à 3 dans lequel la partie de la coque du bateau, qui définit la partie de la chambre (1), comprend une partie de la proue (21) du bateau.

6. Bateau selon l'une des revendications 1 à 3 dans lequel la partie de la coque du navire qui définit la chambre (1) comprend une partie du côté du bateau.

0 020 762

FIG.1

FIG.2

FIG.3